# FASCICULE DE BREVET EUROPEEN

(11) **EP 4 550 078 B1**
(45) Date de publication et mention de la délivrance du brevet: **20.05.2026**
(21) Numéro de dépôt: 24209164.3
(22) Date de dépôt: 28.10.2024
(51) Int. Cl.: G05D 23/19, F24D 19/10

(54) **MÉTHODE DE RÉGLAGE DES PARAMÈTRES D'UNE VANNE THERMOSTATIQUE**
VERFAHREN ZUR EINSTELLUNG DER PARAMETER EINES THERMOSTATVENTILS
METHOD FOR SETTING THE PARAMETERS OF A THERMOSTATIC VALVE

(30) Priorité: 02.11.2023 FR 2311927
(43) Date de publication de la demande: 07.05.2025
(73) Titulaire: DELTA DORE, 35270 Bonnemain (FR)
(72) Inventeur: BRIOLLE DIT BRIONNE, Philippe, 35270 Bonnemain (FR); LEGUILLON, Maxime, 35270 Bonnemain (FR); CLAUDON, Fabrice, 35270 Bonnemain (FR); CHEZE, David, 35270 Bonnemain (FR)
(74) Mandataire: Cabinet Le Guen Maillet

(56) Documents cités:
- US-A1- 2018 058 705
- US-A1- 2020 056 792

## Description

### DOMAINE TECHNIQUE

La présente invention concerne un procédé de paramétrage d'une vanne thermostatique pour le contrôle et la régulation d'une installation de chauffage domestique à circulation de fluide.

### ETAT DE LA TECHNIQUE ANTERIEURE

Une vanne thermostatique est une vanne qui permet de contrôler le débit de fluide dans un radiateur. Classiquement les vannes thermostatiques comportent une sonde thermosensible, qui se dilate et se contracte en fonction de la température ambiante et qui actionne un système mécanique, lequel laisse passer une quantité appropriée de fluide. Une vanne thermostatique est aussi connue sous la dénomination de robinet thermostatique.

Une vanne thermostatique est constituée d'un corps de vanne et d'une tête thermostatique. La tête thermostatique permet de régler une température souhaitée dans une pièce d'un bâtiment en déplaçant un élément mobile compris dans le corps de vanne qui module la quantité de fluide circulant dans le radiateur.

Il existe trois types de têtes thermostatiques, les têtes thermostatiques mécaniques, les têtes thermostatiques électroniques et les têtes thermostatiques connectées.

Les têtes thermostatiques mécaniques sont les têtes thermostatiques les plus classiques, avec une graduation visible allant de 1 à 5 et d'un mode hors gel, elles ne sont pas programmables. Elles sont réglables manuellement, uniquement.

Les têtes thermostatiques électroniques se contrôlent facilement, et ont les mêmes avantages que les mécaniques, mais bénéficient d'un affichage et d'un contrôle digital au demi-degré près. Les têtes thermostatiques électroniques sont programmables, qu'il s'agisse de programmes horaires ou hebdomadaires. Elles se contrôlent directement sur la vanne ou via le thermostat d'ambiance.

Les têtes thermostatiques connectées sont la nouvelle version des têtes thermostatiques et fonctionnent en connexion à un réseau Internet et parfois avec un thermostat connecté.

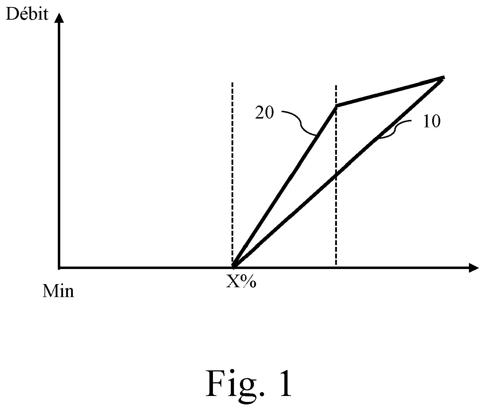

Il existe sur le marché de nombreux corps de vannes aux caractéristiques techniques largement différentes. La Fig. 1 illustre un exemple de variations du débit de fluide en fonction du déplacement d'une tête thermostatique pour différents corps de vannes. La courbe notée 10 représente les variations du débit de fluide en fonction du déplacement d'un élément mobile d'un corps de vanne pour un corps de vanne à réponse linéaire et la courbe notée 20 représente les variations du débit de fluide en fonction du déplacement d'un élément mobile d'un corps de vanne pour un corps de vanne à réponse non linéaire. Il est à remarquer ici que les corps de vannes de par leur structure, ont des linéarités différentes.

Parfois, les corps de vannes ont un point d'ouverture différent. Le point d'ouverture est le point à partir duquel le fluide circule à travers le corps de vanne et donc le radiateur. Dans l'exemple de la Fig. 1, le point d'ouverture est représenté par la notation X%.

Sur l'axe des abscisses, la position correspondant au déplacement de l'élément mobile du corps de vanne à une position ne laissant pas circuler de fluide dans le corps de vanne est notée Min.

Il est possible d'associer à ces corps de vannes, des têtes thermostatiques pouvant être motorisées et connectées. Ces têtes thermostatiques intègrent une régulation permettant de contrôler la température de la pièce avec une consigne fixée par l'utilisateur. La régulation de la tête thermostatique a une action sur le corps de vanne afin de faire circuler un certain débit dans le radiateur. Or, les corps de vannes ont des linéarités différentes selon la marque ou le modèle.

Ainsi pour une même consigne de température et donc une même action du moteur de la tête thermostatique sur le corps de vanne, il est possible d'obtenir des débits largement différents et générer des instabilités dans la régulation de la température.

Ces instabilités se traduisent notamment par une surconsommation d'énergie due aux mouvements intempestifs du moteur. Ce qui est particulièrement problématique lorsque la tête thermostatique est alimentée par l'intermédiaire d'une pile.

Il est notamment souhaitable de fournir une solution qui permette de garantir des débits uniformes quel que soit le type de corps de vanne.

### EXPOSE DE L'INVENTION

Il est proposé un procédé de paramétrage d'une tête thermostatique d'une vanne thermostatique pour le contrôle et la régulation d'une installation de chauffage domestique à circulation de fluide dans une pièce d'un bâtiment, la vanne thermostatique comportant un corps de vanne et une tête thermostatique, la tête thermostatique comportant un moteur pour déplacer un piston de la tête thermostatique, le déplacement du piston provoquant un déplacement d'un élément mobile du corps de vanne, l'élément mobile du corps de vanne laissant circuler en totalité ou en partie ou ne laissant pas circuler de fluide dans le corps de vanne, caractérisé en ce que le procédé comporte les étapes de :
- commande du moteur pour déplacer le piston à une position dans laquelle l'élément mobile du corps de vanne ne laisse pas circuler de fluide dans le corps de vanne,
- déclenchement d'une temporisation d'une première durée prédéterminée,
- vérification, à l'écoulement d'une temporisation d'une seconde durée prédéterminée, si des conditions de paramétrage de la vanne thermostatique sont remplies, les conditions de paramétrage de la vanne thermostatique étant une température de la pièce du bâtiment inférieure à une température prédéterminée et des variations de la température de la pièce du bâtiment durant la temporisation d'une seconde durée prédéterminée sont inférieures à un premier seuil prédéterminé,
- commande du moteur pour déplacer le piston d'une distance prédéterminée pour provoquer le déplacement de l'élément mobile du corps de vanne dans une direction laissant circuler le fluide dans le corps de vanne,
- commande d'une première mesure de la température de la pièce du bâtiment après l'écoulement d'une temporisation d'une troisième durée prédéterminée et mémorisation de la première mesure,
- commande du moteur pour déplacer le piston et provoquer le déplacement de l'élément mobile du corps de vanne à une position ne laissant pas circuler de fluide dans le corps de vanne,
- attente de l'écoulement d'une temporisation d'une quatrième durée prédéterminée,
- commande du moteur pour déplacer le piston et provoquer le déplacement de l'élément mobile du corps de vanne à une position laissant circuler la totalité du fluide dans le corps de vanne,
- commande d'une seconde mesure de la température de la pièce du bâtiment après l'écoulement de la temporisation de la troisième durée prédéterminée et mémorisation de la seconde mesure,
- comparaison de la seconde mesure à la première mesure multipliée par un coefficient,
- application de paramètres de régulation de la température de la pièce du bâtiment en fonction du résultat de la comparaison.

L'invention concerne aussi un dispositif de paramétrage d'une tête thermostatique d'une vanne thermostatique pour le contrôle et la régulation d'une installation de chauffage domestique à circulation de fluide dans une pièce d'un bâtiment, la vanne thermostatique comportant un corps de vanne et une tête thermostatique, la tête thermostatique comportant un moteur pour déplacer un piston de la tête thermostatique, le déplacement du piston provoquant un déplacement d'un élément mobile du corps de vanne, l'élément mobile du corps de vanne laissant circuler en totalité ou en partie ou ne laissant pas circuler de fluide dans le corps de vanne, caractérisé en ce que le dispositif de paramétrage comporte :
- des moyens de commande du moteur pour déplacer le piston à une position dans la laquelle l'élément mobile du corps de vanne ne laisse pas circuler de fluide dans le corps de vanne,
- des moyens de déclenchement d'une temporisation d'une première durée prédéterminée,
- des moyens de vérification, à l'écoulement d'une temporisation d'une seconde durée prédéterminée, si des conditions de paramétrage de la vanne thermostatique sont remplies, les conditions de paramétrage de la vanne thermostatique étant une température de la pièce du bâtiment inférieure à une température prédéterminée et des variations de la température de la pièce du bâtiment durant la temporisation d'une seconde durée prédéterminée sont inférieures à un premier seuil prédéterminé,
- des moyens de commande du moteur pour déplacer le piston d'une distance prédéterminée pour provoquer le déplacement de l'élément mobile du corps de vanne dans une direction laissant circuler le fluide dans le corps de vanne,
- des moyens de commande d'une première mesure de la température de la pièce du bâtiment après l'écoulement d'une temporisation d'une troisième durée prédéterminée et mémorisation de la première mesure,
- des moyens de commande du moteur pour déplacer le piston et provoquer le déplacement de l'élément mobile du corps de vanne à une position ne laissant pas circuler de fluide dans le corps de vanne,
- des moyens d'attente de l'écoulement d'une temporisation d'une quatrième durée prédéterminée,
- des moyens de commande du moteur pour déplacer le piston et provoquer le déplacement de l'élément mobile du corps de vanne à une position laissant circuler la totalité du fluide dans le corps de vanne,
- des moyens de commande d'une seconde mesure de la température de la pièce du bâtiment après l'écoulement de la temporisation de la troisième durée prédéterminée et mémorisation de la seconde mesure,
- des moyens de comparaison de la seconde mesure à la première mesure multipliée par un coefficient,
- des moyens d'application de paramètres de régulation de la température de la pièce du bâtiment en fonction du résultat de la comparaison.

Ainsi, la présente invention fournit une solution qui permet de garantir des débits uniformes quel que soit le type de corps de vanne et qui soit économe en énergie électrique.

Selon un mode de réalisation particulier, le procédé est exécuté une pluralité de fois et au moins une partie des températures mémorisées sont utilisées pour déterminer les paramètres de régulation de la température de la pièce du bâtiment en fonction du résultat de la comparaison.

Ainsi, on adapte la régulation de manière précise au corps de vanne.

Selon un mode de réalisation particulier, la première durée prédéterminée est égale à 24 heures, la seconde durée prédéterminée est égale à une heure, la troisième durée prédéterminée est égale à 20 minutes et la quatrième durée prédéterminée est égale à 60 minutes.

Ainsi, la première durée prédéterminée permet d'effectuer le paramétrage de la vanne thermostatique dans des conditions répétables. La seconde durée prédéterminée garantit une stabilité de température. La troisième durée prédéterminée permet d'avoir un temps suffisant pour voir l'effet de l'action de la commande. La quatrième durée prédéterminée permet de redescendre en température afin de retrouver les conditions initiales.

Selon un mode de réalisation particulier, la température prédéterminée est égale à 17°C, le premier seuil prédéterminé est égal à 0.5°C/heure et le second seuil prédéterminé est égal à 3°C/heure.

Ainsi, la température de 17° permet d'être dans des conditions dans lesquelles aucun autre apport énergétique autre que celui provoqué par le déplacement de l'élément mobile du corps de vanne ne perturbe le paramétrage de la vanne thermostatique.

Selon un mode de réalisation particulier, la distance prédéterminée est égale à 15% de la distance totale de déplacement du piston actionnant le déplacement de l'élément mobile du corps de vanne plus 20% de la distance restante totale de déplacement du piston ou est égale à la distance de déplacement pour aller à un point d'ouverture plus 20% de la distance restante totale de déplacement du piston actionnant le déplacement de l'élément mobile du corps de vanne.

Ainsi, cette distance de 20% permet de se positionner dans une zone où la vanne non linéaire sera pratiquement au maximum de puissance.

Il est également proposé un programme d'ordinateur, qui peut être stocké sur un support et/ou téléchargé d'un réseau de communication, afin d'être lu par un processeur. Ce programme d'ordinateur comprend des instructions pour implémenter le procédé réalisé par une passerelle internet, tel que mentionné ci-dessus, lorsque ledit programme est exécuté par le processeur. L'invention concerne également un support de stockage d'informations stockant un tel programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre un exemple de variations du débit de fluide en fonction du déplacement d'une tête thermostatique pour différents corps de vannes ;
[Fig. 2] illustre schématiquement un exemple d'agencement matériel d'un contrôleur compris dans une tête thermostatique selon la présente invention ;
[Fig. 3] illustre schématiquement un exemple d'agencement matériel d'une vanne thermostatique comprenant la présente invention et dont le type de corps de vanne est linéaire comprenant la présente invention ;
[Fig. 4] illustre schématiquement un exemple d'agencement matériel d'une vanne thermostatique comprenant la présente invention et dont le type de corps de vanne est non linéaire comprenant la présente invention ;
[Fig. 5] illustre schématiquement un exemple d'algorithme exécuté par un contrôleur selon la présente invention.

### EXPOSE DETAILLE DE MODES DE REALISATION

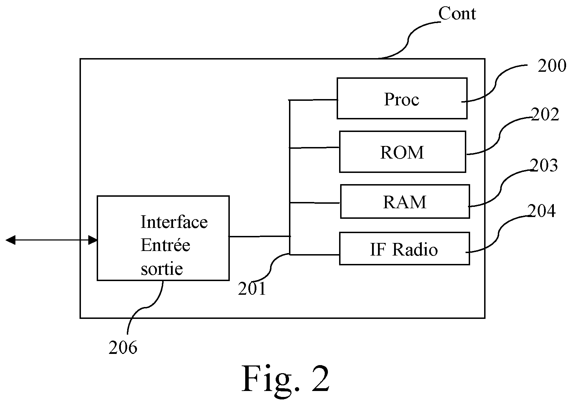

La **Fig. 2** illustre schématiquement un exemple d'agencement matériel d'un contrôleur compris dans une tête thermostatique selon la présente invention.

Le contrôleur Cont comporte, reliés par un bus de communication 201 : un processeur Proc 200 ; une mémoire vive RAM (« Random Access Memory » en anglais) 203 ; une mémoire morte ROM (« Read Only Memory » en anglais) 202 ou une mémoire Flash ; une interface radio 204 et une interface entrée/sortie 206.

L'interface de entrée/sortie 206 permet de commander la rotation d'un moteur compris dans la tête thermostatique, d'obtenir une température d'un capteur de température compris dans la tête thermostatique.

Le processeur Proc 200 est capable d'exécuter des instructions chargées dans la mémoire RAM 203 à partir de la mémoire ROM 202, d'une mémoire externe (telle qu'une carte SD), d'un support de stockage (tel que le disque dur HDD), ou d'un réseau de communication. Lors de la mise sous tension du contrôleur Cont, le processeur Proc 200 est capable de lire dans la mémoire RAM 203 des instructions et de les exécuter. Ces instructions forment un programme d'ordinateur causant la mise en œuvre, par le processeur Proc 200, de tout ou partie des comportements, algorithmes et étapes décrits ici. Ainsi, tout ou partie des algorithmes et étapes décrits ici peut être implémenté sous forme logicielle par exécution d'un ensemble d'instructions par une machine programmable, telle qu'un DSP (« Digital Signal Processor » en anglais) ou un microcontrôleur ou un processeur. Tout ou partie des algorithmes et étapes décrits ici peut aussi être implémenté sous forme matérielle par une machine ou un composant (« chip » en anglais), tel qu'un FPGA (« Field-Programmable Gate Array » en anglais) ou un ASIC (« Application-Specific Integrated Circuit » en anglais). Ainsi, le contrôleur Cont comporte de la circuiterie électronique adaptée et configurée pour implémenter les comportements, algorithmes et étapes décrits ici.

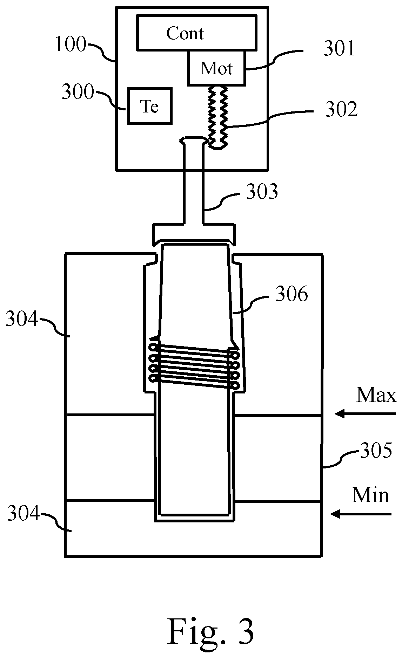

La **Fig. 3** illustre schématiquement un exemple d'agencement matériel d'une vanne thermostatique comprenant la présente invention et dont le type de corps de vanne est linéaire comprenant la présente invention.

La tête thermostatique 100 comporte un contrôleur Cont, un moteur 301, des moyens de transmission 302, un piston 303 et un capteur de température 300.

Le corps de vanne 304 comporte un élément mobile 306 actionné par le piston 303 dont le déplacement module la quantité de fluide circulant dans un conduit 305 relié à un radiateur non présenté dans la Fig. 3.

Lorsque l'élément mobile 306 est à une position notée Min en Fig. 3, l'élément mobile 306 ne laisse pas passer de fluide dans le corps de vanne. Cette position est appelée butée minimale.

Lorsque l'élément mobile 306 est à une position notée Max en Fig. 3, l'élément mobile 306 laisse passer le fluide dans la totalité du conduit du corps de vanne. Cette position est appelée butée maximale.

Lorsque l'élément mobile 306 est à une position comprise entre Min et Max, l'élément mobile 306 laisse passer partiellement le fluide dans le conduit du corps de vanne. Pour représenter les différentes positions prises par l'élément mobile 306, le terme pourcentage d'ouverture du corps de vanne est parfois utilisé.

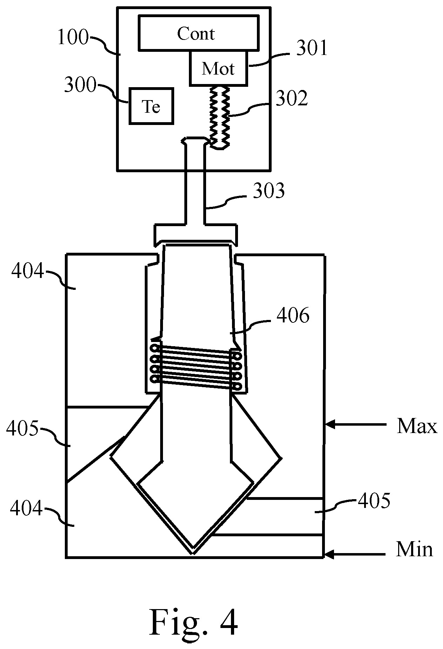

La **Fig. 4** illustre schématiquement un exemple d'agencement matériel d'une vanne thermostatique comprenant la présente invention et dont le type de corps de vanne est non linéaire comprenant la présente invention.

La tête thermostatique 100 comporte un contrôleur Cont , un moteur 301, des moyens de transmission 302, un piston 303 et un capteur de température 300.

Le corps de vanne 404 comporte un élément mobile 406 actionné par le piston 303 dont le déplacement module la quantité de fluide circulant dans un conduit 405 relié à un radiateur non présenté dans la Fig. 3.

Lorsque l'élément mobile 406 est à une position notée Min en Fig. 4, l'élément mobile 406 ne laisse pas passer de fluide dans le corps de vanne. Cette position est appelée butée minimale.

Lorsque l'élément mobile 406 est à une position notée Max en Fig. 4, l'élément mobile 406 laisse passer le fluide dans la totalité du conduit du corps de vanne. Cette position est appelée butée maximale.

Lorsque l'élément mobile 406 est à une position comprise entre Min et Max, l'élément mobile laisse passer partiellement le fluide dans le conduit du corps de vanne. Pour représenter les différentes positions prises par l'élément mobile 406, le terme pourcentage d'ouverture du corps de vanne est parfois utilisé.

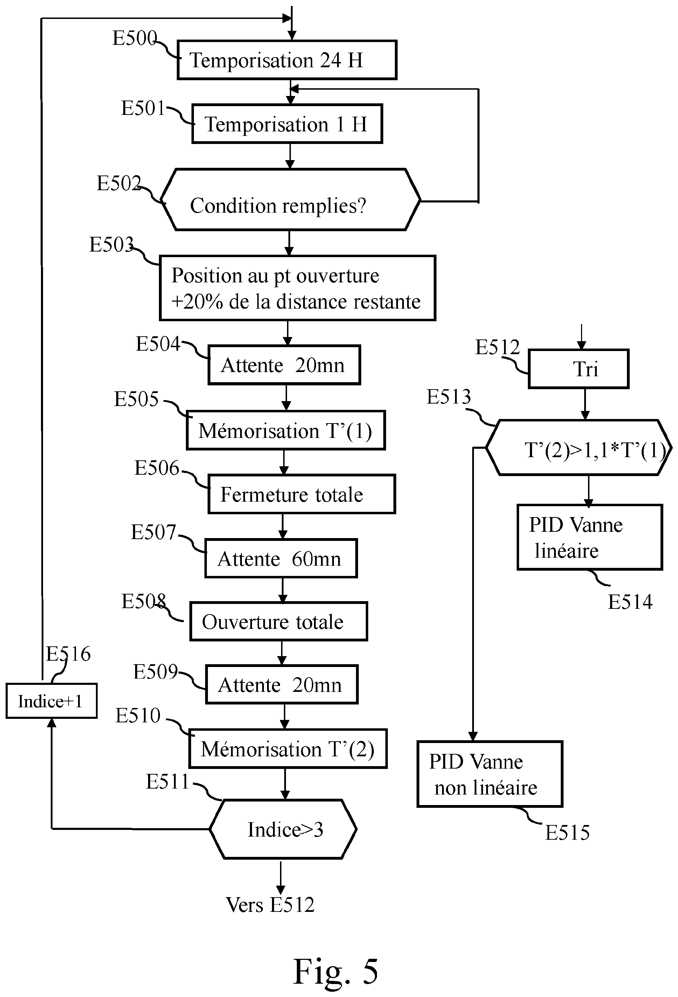

La **Fig. 5** illustre schématiquement un exemple d'algorithme exécuté par un contrôleur selon la présente invention.

Le présent algorithme est exécuté lors de l'installation de la tête thermostatique sur un corps de vanne déjà installé.

Préalablement à l'étape E500, une calibration est effectuée.

L'étape de calibration permet de déterminer la distance maximale que peut parcourir le piston 303 et provoquer le positionnement de l'élément mobile 306 ou 406 en butée avec une paroi inférieure de la tête de vanne 304 ou 404. Cette distance maximale est déterminée en comparant une mesure du courant délivré au moteur 301 à une valeur prédéterminée. Cette valeur est appelée distance totale de déplacement du piston 303. La position du piston 303 correspondant à cette distance est la butée minimale.

Une butée maximale est aussi déterminée, la butée maximale correspond à la distance parcourue par le piston 303 pour placer l'élément mobile en dehors du conduit 305 ou 405. Par exemple, la butée maximale est une valeur prédéfinie.

A l'étape E500, le contrôleur Cont commande le moteur Mot 301 pour une mise en rotation de celui-ci pour arriver à un déplacement du piston 303 telle que l'élément mobile du corps de vanne est dans une position ne laissant pas circuler de fluide dans le corps de vanne et active une temporisation d'une première durée prédéterminée. La première durée prédéterminée est par exemple supérieure ou égale à 24 heures. Lorsque la temporisation de 24 heures est écoulée, le contrôleur Cont passe à l'étape E501.

Il est à remarquer ici qu'en variante, l'étape E500 est exécutée par le contrôleur Cont après l'étape E516 qui sera décrite par la suite.

A l'étape E501, le contrôleur Cont active une temporisation d'une seconde durée prédéterminée. La seconde durée prédéterminée est par exemple au moins égale à 1 heure. Lorsque la temporisation de 1 heure est écoulée, le contrôleur Cont passe à l'étape E502. A l'étape E502, le contrôleur Cont vérifie si des conditions de paramétrage de la vanne thermostatique sont remplies. Les conditions de paramétrage de la vanne thermostatique sont définies pour détecter une certaine augmentation de la température mesurée par la tête de vanne thermostatique qui coïncide avec une circulation de fluide dans le radiateur et donc le franchissement du point d'ouverture du corps de vanne. L'élévation de température associée à l'ouverture du corps de vanne étant faible, il est important de déclencher cette phase de détection lorsque les conditions dans la pièce sont propices.

Ainsi, la température dans la pièce doit être suffisamment basse, c'est-à-dire dans une plage de 14°c à 18°C , par exemple égale à 17°C . Ces conditions sont généralement obtenues la nuit en période hivernale. L'autre condition impose une variation faible de la température dans la pièce, c'est-à-dire inférieure à 0.5°C/heure en valeur absolue. En effet, si celle-ci est trop importante, elle pourrait masquer l'augmentation de température générée par la détection du point d'ouverture du corps de vanne.

Ainsi les conditions de paramétrage de la vanne thermostatique sont une température de la pièce du bâtiment dans une plage de 14°C à 18°C , et que les variations de la température de la pièce du bâtiment durant la temporisation d'une seconde durée prédéterminée soient inférieures à 0,5°C en valeur absolue.

Si les conditions de paramétrage de la vanne thermostatique sont remplies, le contrôleur Cont passe à l'étape E503. Dans la négative, le contrôleur Cont retourne à l'étape E501. A l'étape E503, le contrôleur Cont commande le moteur Mot 301 pour une mise en rotation de celui-ci pour arriver à un déplacement du piston 303, partant de la butée minimale, à une distance prédéterminée égale à 15% de la distance totale de déplacement du piston 303 actionnant le déplacement de l'élément mobile du corps de vanne plus 20% de la distance restante de déplacement du piston 303 ou est égale à la distance de déplacement pour aller, partant de la butée minimale, à un point d'ouverture plus 20% de la distance restante de déplacement du piston actionnant le déplacement de l'élément mobile du corps de vanne.

La distance restante de déplacement du piston 303 est la distance entre la butée minimale plus 15% de la distance totale de déplacement du piston 303 et la butée maximale ou la distance entre le point d'ouverture et la butée maximale.

Le point d'ouverture est le point à partir duquel le fluide circule à travers le corps de vanne et donc le radiateur.

Le point d'ouverture est par exemple déterminé de la manière suivante :
- attente de l'écoulement d'une temporisation de 24 heures,
- vérification, à l'écoulement d'une temporisation de durée au moins égale à 10mn, si des conditions de paramétrage de la vanne thermostatique sont remplies, les conditions de paramétrage de la vanne thermostatique étant une température de la pièce du bâtiment inférieure à une température prédéterminée et des variations de la température de la pièce du bâtiment durant la temporisation d'une seconde durée prédéterminée sont inférieures à un premier seuil prédéterminé,
- commande du moteur compris dans la tête de vanne pour déplacer le piston d'une distance égale à 5% de la distance totale de déplacement du piston actionnant le déplacement de l'élément mobile du corps de vanne,
- mesure de la température de la pièce du bâtiment après l'écoulement d'une temporisation d'une durée égale à 10mn,
- comparaison des variations de la température de la pièce du bâtiment durant la temporisation de 10mn à un second seuil prédéterminé,
- réitération des étapes de vérification de commande et de mesure tant que les variations de la température de la pièce du bâtiment durant la temporisation de 10mn sont inférieures au seuil de variation prédéterminé,
- mémorisation de la distance à laquelle le piston a été déplacé comme le point d'ouverture de la tête de vanne thermostatique.

A l'étape E504, le contrôleur Cont active une temporisation d'une troisième durée prédéterminée. La troisième durée prédéterminée est par exemple égale à 20mn. Lorsque la temporisation de 20mn est écoulée, le contrôleur Cont passe à l'étape E505.

Le principe de l'invention consiste à différencier les corps de vanne linéaires et non linéaires en comparant les augmentations de températures mesurées par la tête de vanne thermostatique pour différentes consignes d'ouvertures du corps de vanne. Ainsi, si l'augmentation de température, partant du point d'ouverture ou de 15% de la distance totale de déplacement du piston, pour un déplacement de 20% de la distance restante de déplacement du piston 303 est équivalente à une augmentation de température pour une ouverture totale de la vanne, cela signifie que le corps de vanne a un comportement non linéaire. Inversement, le corps de vanne a un comportement linéaire.

Une temporisation de 20 minutes permet de prendre en compte l'inertie de la pièce et du radiateur, la consigne étant maintenue pendant ce temps.

A l'étape E505, le contrôleur Cont obtient une première mesure T'(1) de la température de la pièce du bâtiment et la mémorise.

A l'étape E506, le contrôleur Cont commande le moteur compris dans la tête thermostatique pour déplacer le piston 303 et déplacer l'élément mobile du corps de vanne à une position ne laissant pas circuler de fluide dans le corps de vanne.

A l'étape E507, le contrôleur Cont active une temporisation d'une quatrième durée prédéterminée. La quatrième durée prédéterminée est par exemple égale à 60mn. Lorsque la temporisation de 60mn est écoulée, le contrôleur Cont passe à l'étape E508.

A l'étape E508, le contrôleur Cont commande le moteur Mot 301 pour une mise en rotation de celui-ci pour arriver à un déplacement du piston 303 qui correspond à la butée maximale.

A l'étape E509, le contrôleur Cont active une temporisation égale à la troisième durée prédéterminée. Lorsque la temporisation de 20mn est écoulée, le contrôleur Cont passe à l'étape E510.

A l'étape E510, le contrôleur Cont obtient une seconde mesure T'(2) de la température de la pièce du bâtiment et la mémorise ainsi qu'une valeur d'indice.

L'indice est égal à la valeur 1 à la première itération de l'algorithme.

A l'étape E511, le contrôleur Cont vérifie si la valeur de l'indice est supérieure à 3. Dans l'affirmative, le contrôleur Cont passe à l'étape E512. Dans la négative, le contrôleur Cont passe à l'étape E516.

A l'étape E516, le contrôleur Cont incrémente la valeur de l'indice d'une unité et retourne à l'étape E500.

A l'étape E512, le contrôleur Cont effectue un traitement sur les trois couples de valeurs de température mémorisées. Le traitement peut par exemple consister à exclure une valeur largement différente des deux autres valeurs T'(1) ou T'(2) ou bien à moyenner l'ensemble des trois valeurs T'(1) mémorisées et à moyenner l'ensemble des trois valeurs T'(2).

A l'étape E513, le contrôleur Cont détermine si la vanne thermostatique est linéaire ou pas à partir du traitement des trois couples de valeurs de température. Le contrôleur Cont vérifie si la température T'(2) est supérieure à 1,1 fois la température T'(1).

Dans l'affirmative, le contrôleur Cont passe à l'étape E514 et dans la négative, le contrôleur Cont passe à l'étape E515.

A l'étape E514, le contrôleur Cont détermine que la vanne thermostatique est linéaire et applique à une régulation PID, des références minimales et maximales, la référence minimale est la position du point d'ouverture ou est égale à 15% de la distance totale de déplacement du piston 303 partant de la butée minimale, la référence maximale est celle qui se rapproche du débit maximal. Par exemple, la référence maximale est égale à la référence minimale plus 60% de la distance totale de déplacement du piston 303.

A l'étape E515, le contrôleur Cont détermine que la vanne thermostatique est non linéaire et applique à une régulation PID, des références minimales et maximales, la référence minimale est la position du point d'ouverture ou est égale à 15% de la distance totale de déplacement du piston 303 partant de la butée minimale, la référence maximale est celle qui se rapproche du débit maximal. Par exemple, la référence maximale est égale à la référence minimale plus 35% de la distance totale de déplacement du piston 303.

## Revendications

1. Procédé de paramétrage d'une tête thermostatique d'une vanne thermostatique pour le contrôle et la régulation d'une installation de chauffage domestique à circulation de fluide dans une pièce d'un bâtiment, la vanne thermostatique comportant un corps de vanne et une tête thermostatique, la tête thermostatique comportant un moteur pour déplacer un piston de la tête thermostatique, le déplacement du piston provoquant un déplacement d'un élément mobile du corps de vanne, l'élément mobile du corps de vanne laissant circuler en totalité ou en partie ou ne laissant pas circuler de fluide dans le corps de vanne, **caractérisé en ce que** le procédé comporte les étapes de :
- commande (E500) du moteur pour déplacer le piston à une position dans laquelle l'élément mobile du corps de vanne ne laisse pas circuler de fluide dans le corps de vanne,
- déclenchement (E500) d'une temporisation d'une première durée prédéterminée,
- vérification (E502), à l'écoulement d'une temporisation d'une seconde durée prédéterminée, si des conditions de paramétrage de la vanne thermostatique sont remplies, les conditions de paramétrage de la vanne thermostatique étant une température de la pièce du bâtiment inférieure à une température prédéterminée et des variations de la température de la pièce du bâtiment durant la temporisation d'une seconde durée prédéterminée sont inférieures à un premier seuil prédéterminé,
- commande (E503) du moteur pour déplacer le piston d'une distance prédéterminée pour provoquer le déplacement de l'élément mobile du corps de vanne dans une direction laissant circuler le fluide dans le corps de vanne,
- commande (E505) d'une première mesure de la température de la pièce du bâtiment après l'écoulement d'une temporisation d'une troisième durée prédéterminée et mémorisation de la première mesure,
- commande (E506) du moteur pour déplacer le piston et provoquer le déplacement de l'élément mobile du corps de vanne à une position ne laissant pas circuler de fluide dans le corps de vanne,
- attente (E507) de l'écoulement d'une temporisation d'une quatrième durée prédéterminée,
- commande (E508) du moteur pour déplacer le piston et provoquer le déplacement de l'élément mobile du corps de vanne à une position laissant circuler la totalité du fluide dans le corps de vanne,
- commande (E510) d'une seconde mesure de la température de la pièce du bâtiment après l'écoulement de la temporisation de la troisième durée prédéterminée et mémorisation de la seconde mesure,
- comparaison (E513) de la seconde mesure à la première mesure multipliée par un coefficient,
- application (E514, E515) de paramètres de régulation de la température de la pièce du bâtiment en fonction du résultat de la comparaison.

2. Procédé selon la revendication 1, **caractérisé en ce que** le procédé est exécuté une pluralité de fois et au moins une partie des températures mémorisées sont utilisées pour déterminer les paramètres de régulation de la température de la pièce du bâtiment en fonction du résultat de la comparaison.

3. Procédé selon la revendication 1 ou 2, **caractérisé en ce que** la première durée prédéterminée est égale à 24 heures, la seconde durée prédéterminée est égale à une heure, la troisième durée prédéterminée est égale à 20 minutes et la quatrième durée prédéterminée est égale à 60 minutes.

4. Procédé selon l'une quelconque des revendications précédentes, **caractérisé en ce que** le la température prédéterminée est égale à 17°C, le premier seuil prédéterminé est égal à 0.5°C/heure et un second seuil prédéterminé est égal à 3°C/heure.

5. Procédé selon l'une quelconque des revendications précédentes, **caractérisé en ce que** la distance prédéterminée est égale à 15% de la distance totale de déplacement du piston actionnant le déplacement de l'élément mobile du corps de vanne plus 20% de la distance restante de déplacement du piston ou est égale à la distance de déplacement pour aller à un point d'ouverture plus 20% de la distance restante totale de déplacement du piston actionnant le déplacement de l'élément mobile du corps de vanne .

6. Dispositif de paramétrage d'une tête thermostatique d'une vanne thermostatique pour le contrôle et la régulation d'une installation de chauffage domestique à circulation de fluide dans une pièce d'un bâtiment, la vanne thermostatique comportant un corps de vanne et une tête thermostatique, la tête thermostatique comportant un moteur pour déplacer un piston de la tête thermostatique, le déplacement du piston provoquant un déplacement d'un élément mobile du corps de vanne, l'élément mobile du corps de vanne laissant circuler en totalité ou en partie ou ne laissant pas circuler de fluide dans le corps de vanne, **caractérisé en ce que** le dispositif de paramétrage comporte :
- des moyens de commande du moteur pour déplacer le piston à une position dans la laquelle l'élément mobile du corps de vanne ne laisse pas circuler de fluide dans le corps de vanne,
- des moyens de déclenchement d'une temporisation d'une première durée prédéterminée,
- des moyens de vérification, à l'écoulement d'une temporisation d'une seconde durée prédéterminée, si des conditions de paramétrage de la vanne thermostatique sont remplies, les conditions de paramétrage de la vanne thermostatique étant une température de la pièce du bâtiment inférieure à une température prédéterminée et des variations de la température de la pièce du bâtiment durant la temporisation d'une seconde durée prédéterminée sont inférieures à un premier seuil prédéterminé,
- des moyens de commande du moteur pour déplacer le piston d'une distance prédéterminée pour provoquer le déplacement de l'élément mobile du corps de vanne dans une direction laissant circuler le fluide dans le corps de vanne,
- des moyens de commande d'une première mesure de la température de la pièce du bâtiment après l'écoulement d'une temporisation d'une troisième durée prédéterminée et mémorisation de la première mesure,
- des moyens de commande du moteur pour déplacer le piston et provoquer le déplacement de l'élément mobile du corps de vanne à une position ne laissant pas circuler de fluide dans le corps de vanne,
- des moyens d'attente de l'écoulement d'une temporisation d'une quatrième durée prédéterminée,
- des moyens de commande du moteur pour déplacer le piston et provoquer le déplacement de l'élément mobile du corps de vanne à une position laissant circuler la totalité du fluide dans le corps de vanne,
- des moyens de commande d'une seconde mesure de la température de la pièce du bâtiment après l'écoulement de la temporisation de la troisième durée prédéterminée et mémorisation de la seconde mesure,
- des moyens de comparaison de la seconde mesure à la première mesure multipliée par un coefficient,
- des moyens d'application de paramètres de régulation de la température de la pièce du bâtiment en fonction du résultat de la comparaison.

7. Produit programme d'ordinateur comportant des instructions pour implémenter, par un processeur, le procédé selon l'une quelconque des revendications 1 à 5, lorsque ledit programme est exécuté par ledit processeur.

8. Support de stockage d'informations stockant un programme d'ordinateur comprenant des instructions pour implémenter, par un processeur, le procédé selon l'une quelconque des revendications 1 à 5, lorsque ledit programme est lu et exécuté par ledit processeur.

## Patentansprüche

1. Verfahren zur Parametrierung eines Thermostatkopfes eines Thermostatventils zur Steuerung und Regelung einer Hausheizungsanlage mit Fluidkreislauf in einem Raum eines Gebäudes, wobei das Thermostatventil einen Ventilkörper und einen Thermostatkopf aufweist, wobei der Thermostatkopf einen Motor zum Bewegen eines Kolbens des Thermostatkopfes aufweist, wobei die Bewegung des Kolbens eine Bewegung eines beweglichen Elements des Ventilkörpers bewirkt, wobei das bewegliche Element des Ventilkörpers ganz oder teilweise ein Fluid oder kein Fluid im Ventilkörper strömen lässt, **dadurch gekennzeichnet, dass** das Verfahren die folgenden Schritte aufweist:
- Ansteuern (E500) des Motors zum Bewegen des Kolbens auf eine Position, in der das bewegliche Element des Ventilkörpers kein Fluid im Ventilkörper strömen lässt,
- Auslösen (E500) einer Zeitverzögerung einer ersten vorbestimmten Dauer,
- Überprüfen (E502), bei Ablauf einer Zeitverzögerung einer zweiten vorbestimmten Dauer, ob Parametrierungsbedingungen des Thermostatventils erfüllt sind, wobei die Parametrierungsbedingungen des Thermostatventils eine Temperatur des Raums des Gebäudes, die kleiner als eine vorbestimmte Temperatur ist, und Variationen der Temperatur des Raums des Gebäudes während der Zeitverzögerung einer zweiten vorbestimmten Dauer sind kleiner als eine erste vorbestimmte Schwelle, sind,
- Ansteuern (E503) des Motors zum Bewegen des Kolbens um einen vorbestimmten Weg, um die Bewegung des beweglichen Elements des Ventilkörpers in eine Richtung zu bewirken, die das Fluid im Ventilkörper strömen lässt,
- Anfordern (E505) einer ersten Messung der Temperatur des Raums des Gebäudes nach Ablauf einer Zeitverzögerung einer dritten vorbestimmten Dauer und Speichern der ersten Messung,
- Ansteuern (E506) des Motors zum Bewegen des Kolbens und Bewirken der Bewegung des beweglichen Elements des Ventilkörpers auf eine Position, die kein Fluid im Ventilkörper strömen lässt,
- Warten (E507) auf den Ablauf einer Zeitverzögerung einer vierten vorbestimmten Dauer,
- Ansteuern (E508) des Motors zum Bewegen des Kolbens und Bewirken der Bewegung des beweglichen Elements des Ventilkörpers auf eine Position, die das gesamte Fluid im Ventilkörper strömen lässt,
- Anfordern (E510) einer zweiten Messung der Temperatur des Raums des Gebäudes nach Ablauf der Zeitverzögerung der dritten vorbestimmten Dauer und Speichern der zweiten Messung,
- Vergleichen (E513) der zweiten Messung mit der ersten Messung, multipliziert mit einem Koeffizienten,
- Anwenden (E514, E515) von Parametern zur Regelung der Temperatur des Raums des Gebäudes in Abhängigkeit vom Ergebnis des Vergleichs.

2. Verfahren nach Anspruch 1, **dadurch gekennzeichnet, dass** das Verfahren mehrere Male ausgeführt wird und wenigstens einige der gespeicherten Temperaturen dafür verwendet werden, die Parameter zur Regelung der Temperatur des Raums des Gebäudes in Abhängigkeit vom Ergebnis des Vergleichs zu bestimmen.

3. Verfahren nach Anspruch 1 oder 2, **dadurch gekennzeichnet, dass** die erste vorbestimmte Dauer 24 Stunden beträgt, die zweite vorbestimmte Dauer eine Stunde beträgt, die dritte vorbestimmte Dauer 20 Minuten beträgt und die vierte vorbestimmte Dauer 60 Minuten beträgt.

4. Verfahren nach einem der vorhergehenden Ansprüche, **dadurch gekennzeichnet, dass** die vorbestimmte Temperatur 17 °C beträgt, die erste vorbestimmte Schwelle 0,5 °C/Stunde beträgt und eine zweite vorbestimmte Schwelle 3 °C/Stunde beträgt.

5. Verfahren nach einem der vorhergehenden Ansprüche, **dadurch gekennzeichnet, dass** der vorbestimmte Weg 15 % des gesamten Bewegungswegs des Kolbens, der die Bewegung des beweglichen Elements des Ventilkörpers bewirkt, plus 20 % des übrigen Bewegungswegs des Kolbens beträgt, oder gleich dem Bewegungsweg zur Erreichung eines Öffnungspunkts plus 20 % des gesamten übrigen Bewegungswegs des Kolbens, der die Bewegung des beweglichen Elements des Ventilkörpers bewirkt, ist.

6. Vorrichtung zur Parametrierung eines Thermostatkopfes eines Thermostatventils zur Steuerung und Regelung einer Hausheizungsanlage mit Fluidkreislauf in einem Raum eines Gebäudes, wobei das Thermostatventil einen Ventilkörper und einen Thermostatkopf aufweist, wobei der Thermostatkopf einen Motor zum Bewegen eines Kolbens des Thermostatkopfes aufweist, wobei die Bewegung des Kolbens eine Bewegung eines beweglichen Elements des Ventilkörpers bewirkt, wobei das bewegliche Element des Ventilkörpers ganz oder teilweise ein Fluid oder kein Fluid im Ventilkörper strömen lässt, **dadurch gekennzeichnet, dass** die Vorrichtung zur Parametrierung Folgendes aufweist:
- Mittel zum Ansteuern des Motors zum Bewegen des Kolbens auf eine Position, in der das bewegliche Element des Ventilkörpers kein Fluid im Ventilkörper strömen lässt,
- Mittel zum Auslösen einer Zeitverzögerung einer ersten vorbestimmten Dauer,
- Mittel zum Überprüfen, bei Ablauf einer Zeitverzögerung einer zweiten vorbestimmten Dauer, ob Parametrierungsbedingungen des Thermostatventils erfüllt sind, wobei die Parametrierungsbedingungen des Thermostatventils eine Temperatur des Raums des Gebäudes, die kleiner als eine vorbestimmte Temperatur ist, und Variationen der Temperatur des Raums des Gebäudes während der Zeitverzögerung einer zweiten vorbestimmten Dauer sind kleiner als eine erste vorbestimmte Schwelle, sind,
- Mittel zum Ansteuern des Motors zum Bewegen des Kolbens um einen vorbestimmten Weg, um die Bewegung des beweglichen Elements des Ventilkörpers in eine Richtung zu bewirken, die das Fluid im Ventilkörper strömen lässt,
- Mittel zum Anfordern einer ersten Messung der Temperatur des Raums des Gebäudes nach Ablauf einer Zeitverzögerung einer dritten vorbestimmten Dauer und Speichern der ersten Messung,
- Mittel zum Ansteuern des Motors zum Bewegen des Kolbens und Bewirken der Bewegung des beweglichen Elements des Ventilkörpers auf eine Position, die kein Fluid im Ventilkörper strömen lässt,
- Mittel zum Warten auf den Ablauf einer Zeitverzögerung einer vierten vorbestimmten Dauer,
- Mittel zum Ansteuern des Motors zum Bewegen des Kolbens und Bewirken der Bewegung des beweglichen Elements des Ventilkörpers auf eine Position, die das gesamte Fluid im Ventilkörper strömen lässt,
- Mittel zum Anfordern einer zweiten Messung der Temperatur des Raums des Gebäudes nach Ablauf der Zeitverzögerung der dritten vorbestimmten Dauer und Speichern der zweiten Messung,
- Mittel zum Vergleichen der zweiten Messung mit der ersten Messung, multipliziert mit einem Koeffizienten,
- Mittel zum Anwenden von Parametern zur Regelung der Temperatur des Raums des Gebäudes in Abhängigkeit vom Ergebnis des Vergleichs.

7. Computerprogrammprodukt, das Anweisungen zur Implementierung des Verfahrens nach einem der Ansprüche 1 bis 5 durch einen Prozessor, wenn das Programm vom Prozessor ausgeführt wird, aufweist.

8. Informationsspeichermedium, auf dem ein Computerprogramm gespeichert ist, das Anweisungen zur Implementierung des Verfahrens nach einem der Ansprüche 1 bis 5 durch einen Prozessor, wenn das Programm vom Prozessor gelesen und ausgeführt wird, aufweist.

## Claims

1. Method for parameterising a thermostatic head of a thermostatic valve for controlling and regulating a fluid-flow domestic heating installation in a room in a building, the thermostatic valve comprising a valve body and a thermostatic head, the thermostatic head comprising a motor for moving a piston of the thermostatic head, the movement of the piston causing a movement of a movable element of the valve body, the movable element of the valve body allowing fluid to flow in whole or in part, or not allowing it to flow, in the valve body, **characterised in that** the method comprises the steps of:
- controlling (E500) the motor to move the piston to a position wherein the movable element of the valve body does not allow fluid to flow in the valve body,
- triggering (E500) a time delay of a first predetermined duration,
- checking (E502), at the elapse of a time delay of a second predetermined duration, whether conditions of parameterising the thermostatic valve are met, the conditions of parameterising the thermostatic valve being a temperature of the room in the building below a predetermined temperature and variations in the temperature of the room in the building during the time delay of a second predetermined duration are below a first predetermined threshold,
- controlling (E503) the motor to move the piston by a predetermined distance to cause the movement of the movable element of the valve body in a direction allowing the fluid to flow in the valve body,
- demanding (E505) a first measurement of the temperature of the room in the building after the elapse of a time delay of a third predetermined duration and storage of the first measurement,
- controlling (E506) the motor to move the piston and cause the movement of the movable element of the valve body to a position not allowing fluid to flow in the valve body,
- awaiting (E507) the elapse of a time delay of a fourth predetermined duration,
- controlling (E508) the motor to move the piston and cause the movement of the movable element of the valve body to a position allowing all the fluid to flow in the valve body,
- demanding (E510) a second measurement of the temperature of the room in the building after the elapse of the time delay of the third predetermined duration and storage of the second measurement,
- comparing (E513) the second measurement with the first measurement multiplied by a coefficient,
- applying (E514, E515) parameters for regulating the temperature of the room in the building according to the result of the comparison.

2. Method according to claim 1, **characterised in that** the method is implemented a plurality of times and at least some of the temperatures stored are used to determine the parameters for regulating the temperature of the room in the building according to the result of the comparison.

3. Method according to claim 1 or 2, **characterised in that** the first predetermined duration is equal to 24 hours, the second predetermined duration is equal to one hour, the third predetermined duration is equal to 20 minutes and the fourth predetermined duration is equal to 60 minutes.

4. Method according to any one of the preceding claims, **characterised in that** the predetermined temperature is equal to 17°C, the first predetermined threshold is equal to 0.5°C/hour and the second predetermined threshold is equal to 3°C/hour.

5. Method according to any one of the preceding claims, **characterised in that** the predetermined distance is equal to 15% of the total distance of movement of the piston actuating the movement of the movable element of the valve body plus 20% of the remaining distance of movement of the piston or is equal to the movement distance for going to an opening point plus 20% of the total remaining distance of movement of the piston actuating the movement of the movable element of the valve body.

6. Device for parameterising a thermostatic head of a thermostatic valve for controlling and regulating a fluid-flow domestic heating installation in a room in a building, the thermostatic valve comprising a valve body and a thermostatic head, the thermostatic head comprising a motor for moving a piston of the thermostatic head, the movement of the piston causing a movement of a movable element of the valve body, the movable element of the valve body allowing fluid to flow in whole or in part, or not allowing it to flow, in the valve body, **characterised in that** the parameterising device comprises:
- means for controlling the motor to move the piston to a position wherein the movable element of the valve body does not allow fluid to flow in the valve body,
- means for triggering a time delay of a first predetermined duration,
- means for checking, at the elapse of a time delay of a second predetermined duration, whether conditions of parameterising the thermostatic valve are met, the conditions of parameterising the thermostatic valve being a temperature of the room in the building below a predetermined temperature and variations in the temperature of the room in the building during the time delay of a second predetermined duration are below a first predetermined threshold,
- means for controlling the motor to move the piston by a predetermined distance to cause the movement of the movable element of the valve body in a direction allowing the fluid to flow in the valve body,
- means for demanding a first measurement of the temperature of the room in the building after the elapse of a time delay of a third predetermined duration and storage of the first measurement,
- means for controlling the motor to move the piston and cause the movement of the movable element of the valve body to a position not allowing fluid to flow in the valve body,
- means for awaiting the elapse of a time delay of a fourth predetermined duration,
- means for controlling the motor to move the piston to cause the movement of the movable element of the valve body to a position allowing all the fluid to flow in the valve body,
- means for demanding a second measurement of the temperature of the room in the building after the elapse of the time delay of the third predetermined duration and storage of the second measurement,
- means for comparing the second measurement with the first measurement multiplied by a coefficient,
- means for applying parameters for regulating the temperature of the room in the building according to the result of the comparison.

7. Computer program product comprising instructions for implementing, by a processor, the method according to any one of claims 1 to 5, when said program is executed by said processor.

8. Information storage medium storing a computer program comprising instructions for implementing, by a processor, the method according to any one of claims 1 to 5, when said program is read and executed by said processor.
